# EUROPEAN PATENT SPECIFICATION

(11) **EP 2 073 567 B1**
(45) Date of publication and mention of the grant of the patent: **19.10.2011**
(21) Application number: 07291580.4
(22) Date of filing: 20.12.2007
(51) Int. Cl.: H04Q 11/04

(54) **Access multiplexor integrating a power management system of the ports**
Zugangs-Multiplexer zum Zusammenschluss mit einem Leistungsverwaltungssystem der Anschlüsse
Accès de multiplexeur intégrant un système de gestion d'alimentation des ports

(43) Date of publication of application: 24.06.2009
(73) Proprietor: Alcatel Lucent, 75008 Paris (FR)
(72) Inventor: Defoort, Frank, 9150 Kruibeke-Bazel (BE); Verlinden, Jan, 2160 Wommelgem (BE); Gendarme, Christophe, 2018 Antwerpen (BE)
(74) Representative: Nicolle, Olivier

(56) References cited:
- WO-A-03/081942
- WO-A-2007/044326
- US-B1- 7 133 419

## Description

The invention relates to an access multiplexor, for example a Digital Subscriber Line Multiplexor (DSLAM), integrating power management system of ports and a power management process of an access multiplexor.

A Digital Subscriber Line Access Multiplexer (DSLAM) allows telephone lines to enable triple play services (internet, phone, video), quality of service. It is a network device connecting multiple customers Digital Subscriber Lines (DSL) to a high-speed Internet backbone line using multiplexing techniques.

Document WO-2007/044326 describes methods, techniques, computer program products, apparatus, devices, etc..., used in connection with DSL Management Interfaces, significantly improve the management capabilities of a DSL network and/or improve testing relating to DSL equipment and services by permitting better control and operation of a DSL system, including implementation of timestamping for more accurate measurement, monitoring and control of a system.

Document US-7 133 419 describes a system and method for reducing power consumption by shaping the spectrum of a downstream signal.

Current DSLAM densities are rapidly increasing, and the gap between the dimensioning rules and the effective use is increasing, causing cost and density problems.

The power dissipation capacity of DSLAM is based on an estimation of the static worst case of power dissipation of said DSLAM.

In a known manner, in order to reduce power consumption, the DSL operator can either change some operational parameters (e.g reduce the agregate transmit power, limit bit rate, limit the Signal-to-noise Ratio margins limit the PSD Mask,...) of DSL ports manually, either limit the number of subscribers of a DSLAM. However, this approach is creating a costly overhead like manual intervention, and can hardly be sustained as a DSLAM represents thousands of lines, which can dynamically be switched on/off and consequently suffer from external conditions changes.

The purpose of the invention is to resolve the problems of the prior art by proposing, in particular, an access multiplexor integrating a power management system with a feed-back loop in order to configure individually ports parameters according to a given power consumption budget for the acess multiplexor.

For that purpose and according to a first aspect, the invention relates to an access multiplexor according to claim 1.

According to a second aspect, the invention relates to power management process according to claim 4.

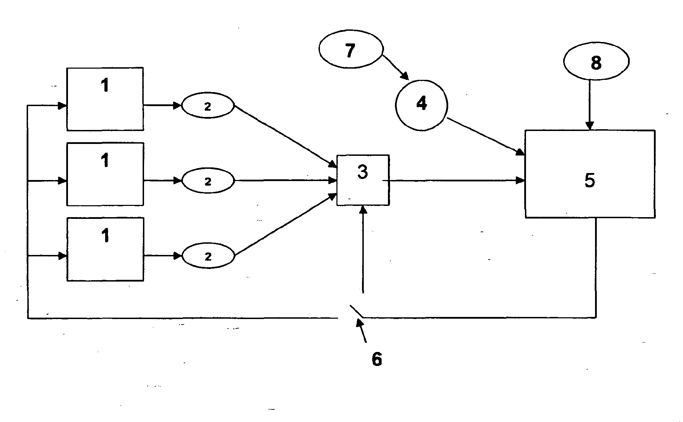

Other aspects and advantages will become apparent in the following description made with reference to the appended figure that illustrates the carrying out of the process according to an embodiment of the invention.

The present invention concerns an access multiplexor comprising ports 1, said access multiplexor integrates power management system of the ports 1. It notably applies to DSLAM, but it could also be applicable to other access technologies, like wireless, optical...

At a stage of the power management process, power consumption is measured individually by a power consumption sensor 2 for each DSL port or grouped ports 1, which are then summed together. In the appended figure, only 3 DSL ports 1 are represented, but typically a DSLAM could integrate thousands of DSL ports 1.

The power management system comprises a feed-back loop between means for summing 3 the power consumption of each managed port 1 and each of such ports.

A power consumption model 5 for calculating individually the ports parameters is established according to a power consumption budget 4 and the actual power consumption from the summation function 3, power consumption budget 4 being an independent input of the power consumption model 5.

The power consumption budget 4 is determined considering the maximum power consumption/temperature allowed in the DSLAM.

The power consumption model 5 uses historical data from the power consumed by the ports 1 as previously configured, such as power dissipation of the DSLAM, specific operator configuration, measured power consumption of each DSL port 1, a mathematical model of the temperature/power dissipation, or estimated loop length. The power consumption model 5 also takes into account the power consumption 8 of those elements within the DSLAM which scale or do not scale with the power consumption of the DSL ports, for instance fans, Network Termination elements, rack control elements, other non-DSL Line Termination elements,...

The power consumption model 5 configures individually at least one port parameter according to a comparison between the sum of the power consumption of each port 1 and the given power consumption budget 4. In addition, power consumption budget 4 is influenced by inputs 7 such as temperature sensors, maximum temperature parameters, other sensors, other configuration parameters.

The power consumption model 5 notably provides control parameters of the configuration like switch on/off DSL port , force low power / low traffic states of DSL ports, and static configuration management (aggregate transmit power, frequency range, maximum bit rate, maximum Signal-to-Noise Ratio margin).

The power manager system adapts DSL ports configuration within the limit of individual subscribers' contracts.

For example, if the contract with subscriber allows so, DSL ports 1 of lines which have not been used in the last hour can be switched off.

In another way, the power management system can be configured such that it can police configurations / expectations for instance by refusing to add new subscribers to the DSLAM when the maximum power budget is reached, according to its defence strategy.

DSL ports 1 of subscribers having a contract which allows a higher error rate and/or resynchronisations (typically users without voice or video over DSL) can be reconfigured with a lower Signal-to-Noise Ratio margin.

In order to improve the power consumption model 5, the power management system comprises a switch 6 for by-passing the feed-back loop at the ports side. As such, a new configuration can be emulated, without actually changing the line parameters.

When using the by passed loop the power consumption of each DSL port 1 is derived from its configuration parameters. The calculating stage is iterative and can use many trial-configurations and corresponding DSL ports 1 power consumption until reaching the best adapted DSL ports configuration.

Switch 6 is then no longer by-passed and the power management model 5 is then applied to configure the DSL ports 1.

By using actual input of the power consumption instead of worst case, the power management system could reduce power consumption budget of 30% with respect to previous methods and without compromise. Such power saving also corresponds to a more efficient use of energy in DSLAM, for instance converters can be designed for lower power and work with higher load.

## Claims

1. Access multiplexor comprising ports (1), whereby the access multiplexor integrates power management system of the ports (1), said system comprising a feed-back loop between means for summing (3) the power consumption of each managed port (1) and each of such ports, said feed-back loop comprising means to configure individually at least one port parameter according to a given power consumption budget (4) for the access multiplexor, **characterised in that** said configuration means comprises a power consumption model (5) for calculating individually the at least one port parameter according to said power consumption budget.

2. Access multiplexor according to claim 1, **characterised in that** the power management system comprises power consumption sensor (2) of each port (1).

3. Access multiplexor according to claim 2, **characterised in that** the configuration means further comprises a switch (6) for by-passing the feed-back loop at the ports side, said by-passed loop comprising the power consumption model (5) in order, before the ports configuration, to be able to calculate the power consumption of each managed port (1) according to the model (5).

4. Power management process of an access multiplexor, wherein at least one parameter of each port (1) is configured according to a comparison between the sum of power consumption of each port (1) and a given power consumption budget (4) for the access multiplexor, a power consumption model (5) being used to configure the ports (1).

5. Power management process according to claim 4, wherein the ports power consumptions are measured individually.

6. Power management process according to claim 5, wherein, before the ports configuration, it provides with a stage of calculating the power consumption of each port according to the model (5).

7. Power management process according to claim 6, wherein the calculating stage is iterative with the summing of the calculated power consumption of each port (1) and the comparison of such sum with the power consumption budget (4).

8. Power management process according to any of claims 4 to 7, wherein the power consumption model (5) uses historical data from the power consumed by the ports (1) as previously configured.

## Patentansprüche

1. Zugangsmultiplexer mit Ports (1), wobei der Zugangsmultiplexer ein System zur Leistungsverwaltung der Ports (1) integriert, wobei das besagte System eine Rückkopplungsschleife zwischen Mitteln zum Addieren (3) des Leistungsverbrauchs eines jeden verwalteten Ports (1) und eines jeden solcher Ports umfasst, wobei die besagte Rückkopplungsschleife ein Mittel zum individuellen Konfigurieren mindestens eines Portparameters gemäß einem gegebenen Leistungsverbrauchsbudget (4) für den Zugangsmultiplexer umfasst, **dadurch gekennzeichnet, dass** das besagte Konfigurationsmittel ein Leistungsverbrauchsmodell (5) zur individuellen Berechnung des mindestens einen Portparameters gemäß dem besagten Leistungsverbrauchsbudget umfasst.

2. Zugangsmultiplexer nach Anspruch 1, **dadurch gekennzeichnet, dass** das Leistungsverwaltungssystem einen Leistungsverbrauchssensor (2) für jeden Port (1) umfasst.

3. Zugangsmultiplexer nach Anspruch 2, **dadurch gekennzeichnet, dass** das Konfigurationsmittel weiterhin einen Switch (6) zur portseitigen Umgehung der Rückkopplungsschleife umfasst, wobei die besagte umgangene Schleife ein Leistungsverbrauchsmodell (5) umfasst, um vor der Konfiguration der Ports fähig zu sein, den Leistungsverbrauch eines jeden verwalteten Ports (1) gemäß dem Modell (5) zu berechnen.

4. Leistungsverwaltungsprozess für einen Zugangsmultiplexer, wobei mindestens ein Parameter eines jeden Ports (1) gemäß einem Vergleich zwischen der Summe des Leistungsverbrauchs eines jeden Ports (1) und einem gegebenen Leistungsverbrauchsbudget (4) für den Zugangsmultiplexer konfiguriert ist, wobei ein Leistungsverbrauchsmodell (5) für die Konfiguration der Ports (1) verwendet wird.

5. Leistungsverwaltungsprozess nach Anspruch 4, wobei der Leistungsverbrauch der Ports individuell gemessen wird.

6. Leistungsverwaltungsprozess nach Anspruch 5, welcher vor der Konfiguration der Ports eine Phase der Berechnung des Leistungsverbrauchs eines jeden Ports gemäß dem Modell (5) bereitstellt.

7. Leistungsverwaltungsprozess nach Anspruch 6, wobei die Phase der Berechnung mit der Addition des berechneten Leistungsverbrauchs eines jeden Ports (1) und dem Vergleich einer solchen Addition mit dem Leistungsverbrauchsbudget (4) iterativ ist.

8. Leistungsverwaltungsprozess nach einem beliebigen der Ansprüche 4 bis 7, wobei das Leistungsverbrauchsmodell (5) historische Daten der von den wie zuvor konfigurierten Ports (1) verbrauchten Leistung verwendet.

## Revendications

1. Multiplexeur d'accès comprenant des ports (1), le multiplexeur d'accès intégrant un système de gestion d'énergie des ports (1), ledit système comprenant une boucle de contre-réaction entre des moyens pour additionner (3) la consommation d'énergie de chaque port géré (1) et chacun desdits ports, ladite boucle de contre-réaction comprenant des moyens pour configurer individuellement au moins un paramètre de port conformément à un budget de consommation d'énergie (4) donné pour le multiplexeur d'accès, **caractérisé en ce que** lesdits moyens de configuration comprennent un modèle de consommation d'énergie (5) pour calculer individuellement au moins un paramètre de port conformément audit budget de consommation d'énergie.

2. Multiplexeur d'accès selon la revendication 1, **caractérisé en ce que** le système de gestion d'énergie comprend un capteur de consommation d'énergie (2) de chaque port (1).

3. Multiplexeur d'accès selon la revendication 2, **caractérisé en ce que** les moyens de configuration comprennent en outre un commutateur (6) pour contourner la boucle de contre-réaction du côté des ports, ladite boucle contournée comprenant le modèle de consommation d'énergie (5) afin d'être en mesure, avant la configuration des ports, de calculer la consommation d'énergie de chaque port géré (1) conformément au modèle (5).

4. Procédé de gestion d'énergie d'un multiplexeur d'accès, au moins un paramètre de chaque port (1) étant configuré en fonction d'une comparaison entre la somme des consommations d'énergie de chaque port (1) et un budget de consommation d'énergie (4) donné pour le multiplexeur d'accès, un modèle de consommation d'énergie (5) étant utilisé pour configurer les ports (1).

5. Procédé de gestion d'énergie selon la revendication 4, avec lequel les consommations d'énergie des ports sont mesurées individuellement.

6. Procédé de gestion d'énergie selon la revendication 5, avec lequel, avant la configuration des ports, il dispose d'une étape de calcul de la consommation d'énergie de chaque port conformément au modèle (5).

7. Procédé de gestion d'énergie selon la revendication 6, avec lequel l'étape de calcul est itérative avec l'addition de la consommation d'énergie calculée de chaque port (1) et la comparaison dudit total avec le budget de consommation d'énergie (4).

8. Procédé de gestion d'énergie selon l'une quelconque des revendications 4 à 7, avec lequel le modèle de consommation d'énergie (5) utilise des données historiques de l'énergie consommée par les ports (1) tels qu'ils étaient configurés précédemment.
